# EUROPEAN PATENT APPLICATION

(11) **EP 4 513 956 A1**
(43) Date of publication of application: **26.02.2025**
(21) Application number: 24194929.6
(22) Date of filing: 16.08.2024
(51) Int. Cl.: H04W 28/08, H04W 36/22

(54) **LOAD BALANCING OPTIMIZATIONS FOR O-RAN NETWORKS**

(30) Priority: 19.08.2023 IN 202321055658; 13.08.2024 US 202418802449
(71) Applicant: Mavenir Systems, Inc., Richardson, TX 75081 (US)
(72) Inventor: Kompalli Chakravartula, Kalyana Rama Sesha Sayee, 560036 Bangalore (IN); S, Srinivasan, 560037 Bangalore (IN); Kaimalettu, Sunil, Bangalore (IN); Taneja, Mukesh, 560037 Bangalore (IN); Kaul, Suveer, 560064 Bangalore (IN); Midde, Sunil Kumar, 516360 Andhra Pradesh (IN)
(74) Representative: dompatent von Kreisler Selting Werner - Partnerschaft von Patent- und Rechtsanwälten mbB

(57) **Abstract**

A method for load balancing in an Open Radio Access Network (O-RAN) system having an overloaded serving cell of a first base station includes: determining, by at least the first base station, radio-resource-usage efficiency of each one of a subset of user equipments (UEs) in the overloaded serving cell; determining, by at least the first base station, from the subset of UEs a list of candidate UEs for handover from the overloaded serving cell to a non-overloaded neighboring cell, based on one of i) per-UE average physical resource block (PRB) usage over a specified time period, or ii) per-UE average of measurements involving modulation-and-coding-scheme over a specified time period; and handing over, by the first base station, at least a selected number of UEs from the list of candidate UEs to the non-overloaded neighboring cell to implement load balancing.

## Description

### BACKGROUND OF THE INVENTION

### 1. Field of the Invention

The present disclosure is related to Open Radio Access Network (O-RAN) systems, and relates more particularly to optimizing load balancing (LB) in O-RAN networks.

### 2. Description of Related Art

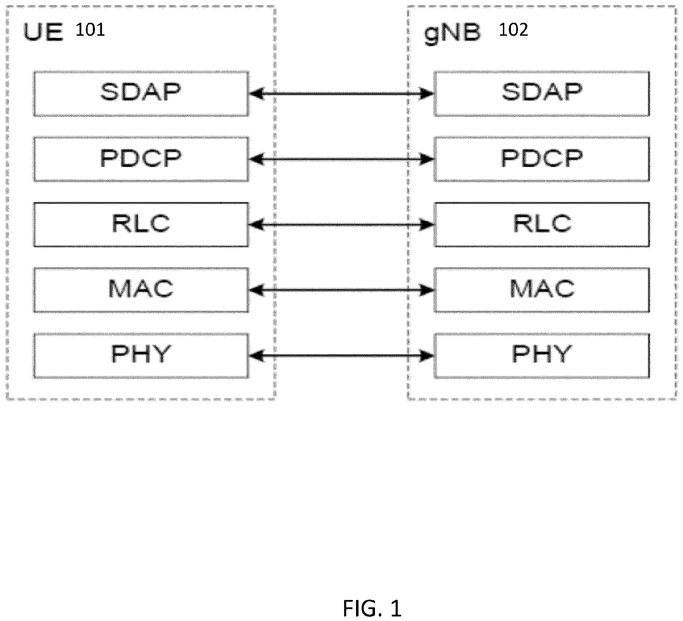

In the following sections, overview of Next Generation Radio Access Network (NG-RAN) architecture and 5G New Radio (NR) stacks will be discussed. 5G NR (New Radio) user and control plane functions with monolithic gNB (gNodeB) are shown in FIGS. 1, 2 and 3. For the user plane (shown in FIG. 1, which is in accordance with 3GPP TS 38.300), PHY (physical), MAC (Medium Access Control), RLC (Radio Link Control), PDCP (Packet Data Convergence Protocol) and SDAP (Service Data Adaptation Protocol) sublayers originate in the UE 101 and are terminated in the gNB 102 on the network side.

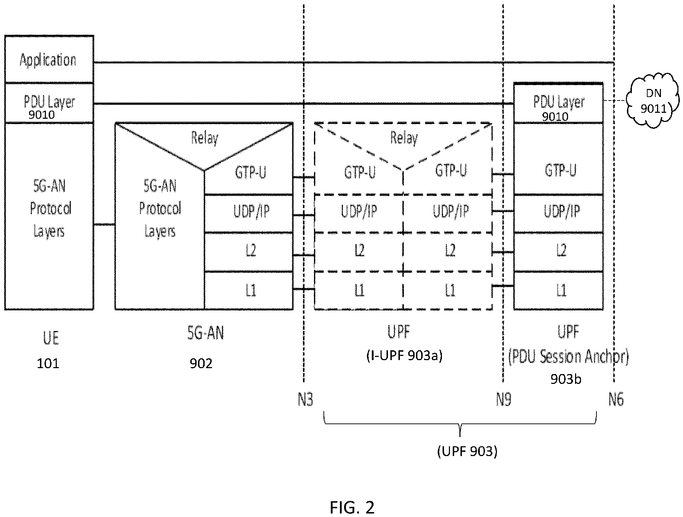

In addition, as shown in FIG. 2 (which is accordance with 3GPP TS 23.501), which is a block diagram illustrating the user plane protocol stacks for a PDU session of 5G NR, the Protocol Data Unit (PDU) layer 9010 corresponds to the PDU carried between the user equipment (UE) 101 and the data network (DN) 9011 over the PDU session. As shown in FIG. 2, UE 101 is connected to the 5G access network (AN) 902, which AN 902 is in turn connected via the N3 interface to the Intermediate UPF (I-UPF) 903a portion of the UPF 903, which I-UPF 903a is in turn connected via the N9 interface to the PDU session anchor 903b portion of the UPF 903, and which PDU session anchor 903b is connected to the DN 9011. The PDU session can correspond to Internet Protocol version 4 (IPv4), IPv6, or both types of IP packets (IPv4v6). General Packet Radio Services (GPRS) Tunneling Protocol - User Plane (GTP-U) shown in FIG. 2 supports tunnelling user plane data over N3 and N9 interfaces and provides encapsulation of end user PDUs for N3 and N9 interfaces.

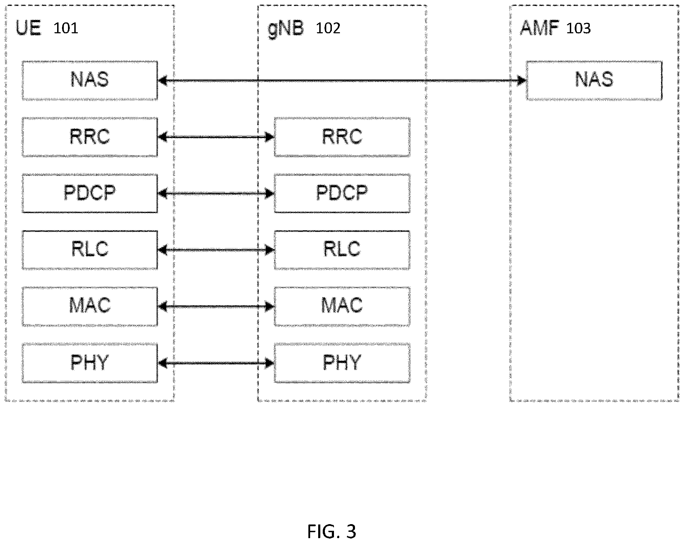

For the control plane (shown in FIG. 3, which is in accordance with 3GPP TS 38.300), RRC (Radio Resource Control), PDCP, RLC, MAC and PHY sublayers originate in the UE 101 and are terminated in the gNB 102 on the network side, and NAS (Non-Access Stratum) originate in the UE 101 and is terminated in the AMF (Access Mobility Function) 103 on the network side.

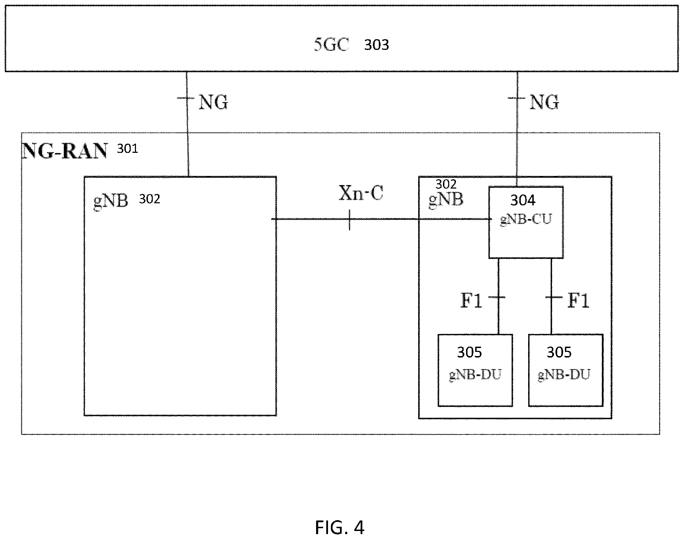

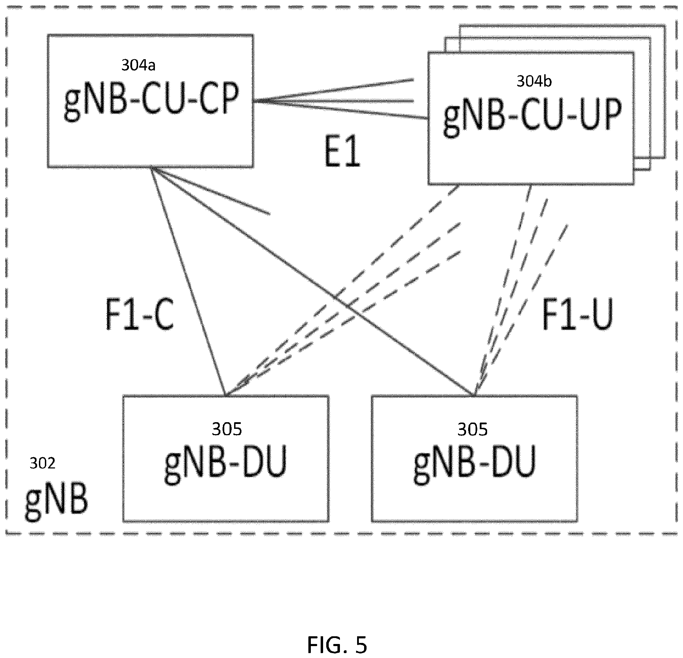

NG-Radio Access Network (NG-RAN) architecture from 3GPP TS 38.401 is shown in FIGS. 4-5. As shown in FIG. 4, the NG-RAN consists of a set of gNBs connected to the 5GC through the NG interface. As shown in FIG. 4, the NG-RAN 301 consists of a set of gNBs 302 connected to the 5GC 303 through the NG interface. Each gNB comprises gNB-CU 304 and one or more gNB-DU 305 (see FIG. 4). As shown in FIG. 5 (which illustrates separation of CU-CP (CU-Control Plane) and CU-UP (CU-User Plane)), E1 is the interface between gNB-CU-CP (CU-Control Plane) 304a and gNB-CU-UP (CU-User Plane) 304b, F1-C is the interface between gNB-CU-CP 304a and gNB-DU 305, and F1-U is the interface between gNB-CU-UP 304b and gNB-DU 305. As shown in FIG. 5, gNB 302 can consist of a gNB-CU-CP 304a, multiple gNB-CU-UPs (or gNB-CU-UP instances) 304b and multiple gNB-DUs (or gNB-DU instances) 305. One gNB-DU 305 is connected to only one gNB-CU-CP 304a, and one gNB-CU-UP 304b is connected to only one gNB-CU-CP 304a.

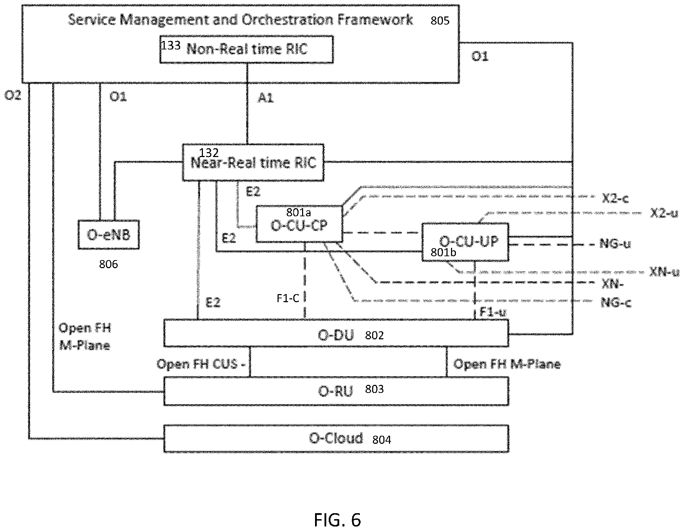

Open Radio Access Network (O-RAN) is based on disaggregated components which are connected through open and standardized interfaces based on 3GPP NG-RAN. An overview of O-RAN with disaggregated RAN CU (Centralized Unit), DU (Distributed Unit), and RU (Radio Unit), near-real-time Radio Intelligent Controller (RIC) and non-real-time RIC is illustrated in FIG. 6.

As shown in FIG. 6, the CU (shown split as O-CU-CP 801a and O-CU-UP 801b) and the DU (shown as O-DU 802) are connected using the F1 interface (with F1-C for control plane and F1-U for user plane traffic) over a mid-haul (MH) path. One DU can host multiple cells (e.g., one DU could host 24 cells) and each cell may support many users. For example, one cell may support 800 Radio Resource Control (RRC)-connected users and out of these 800, there may be 250 Active users (i.e., users that have data to send at a given point of time).

A cell site can comprise multiple sectors, and each sector can support multiple cells. For example, one site could comprise three sectors and each sector could support eight cells (with eight cells in each sector on different frequency bands). One CU-CP (CU-Control Plane) could support multiple DUs and thus multiple cells. For example, a CU-CP could support 1,000 cells and around 100,000 User Equipments (UEs). Each UE could support multiple Data Radio Bearers (DRB) and there could be multiple instances of CU-UP (CU-User Plane) to serve these DRBs. For example, each UE could support 4 DRBs, and 400,000 DRBs (corresponding to 100,000 UEs) may be served by five CU-UP instances (and one CU-CP instance).

The DU could be located in a private data center, or it could be located at a cell-site. The CU could also be in a private data center or even hosted on a public cloud system. The DU and CU, which are typically located at different physical locations, could be tens of kilometers apart. The CU communicates with a 5G core system, which could also be hosted in the same public cloud system (or could be hosted by a different cloud provider). A RU (Radio Unit) (shown as O-RU 803 in FIG. 6) is located at a cell-site and communicates with the DU via a front-haul (FH) interface.

The E2 nodes (CU and DU) are connected to the near-real-time RIC 132 using the E2 interface. The E2 interface is used to send data (e.g., user and/or cell KPMs) from the RAN, and deploy control actions and policies to the RAN at near-real-time RIC 132. The applications or services at the near-real-time RIC 132 that deploys the control actions and policies to the RAN are called xApps. During the E2 setup procedures, the E2 node advertises the metrics it can expose, and an xApp in the near-RT RIC can send a subscription message specifying key performance metrics which are of interest. The near-real-time RIC 132 is connected to the non-real-time RIC 133 (which is shown as part of Service Management and Orchestration (SMO) Framework 805 in FIG. 6) using the A1 interface. The applications that are hosted at non-RT-RIC are called rApps. Also shown in FIG. 6 are O-eNB 806 (which is shown as being connected to the near-real-time RIC 132 and the SMO Framework 805) and O-Cloud 804 (which is shown as being connected to the SMO Framework 805).

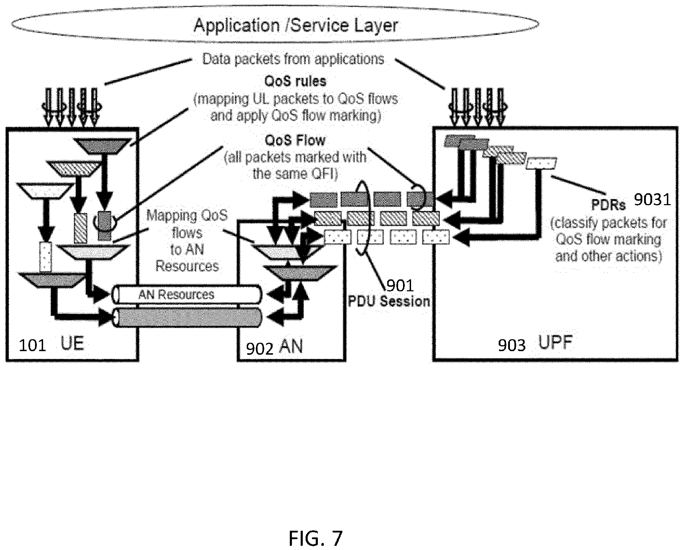

In this section, PDU sessions, DRBs, and quality of service (QoS) flows will be discussed. In 5G networks, PDU connectivity service is a service that provides exchange of PDUs between a UE and a data network identified by a Data Network Name (DNN). The PDU Connecitivity service is supported via PDU sessions that are established upon request from the UE. The DNN defines the interface to a specific external data network. One or more QoS flows can be supported in a PDU session. All the packets belonging to a specific QoS flow have the same 5QI (5G QoS Identifier). A PDU session consists of the following: Data Radio Bearer which is between UE and CU in RAN; and an NG-U GTP tunnel which is between CU-UP and UPF (User Plane Function) in the core network. FIG. 7 illustrates an example PDU session (in accordance with 3GPP TS 23.501) consisting of multiple DRBs, where each DRB can consist of multiple QoS flows. In FIG. 7, three components are shown for the PDU session 901: UE 101; access network (AN) 902; and UPF 903, which includes Packet Detection Rules (PDRs) 9031.

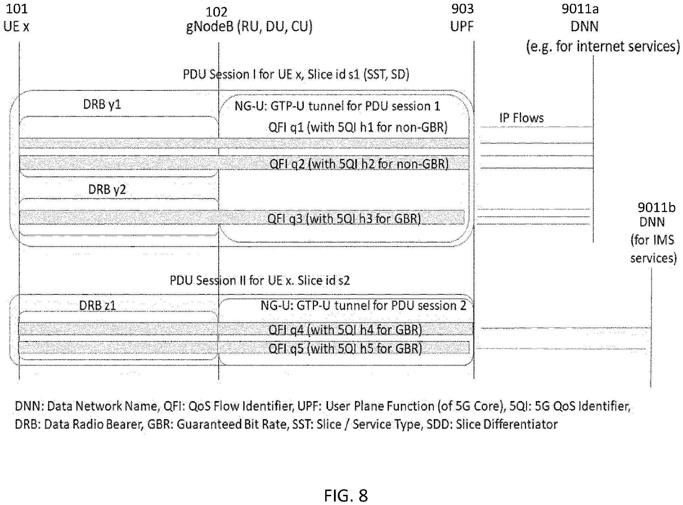

The following should be noted for 3GPP 5G network architecture, which is illustrated in FIG. 8 (in the context of multiple PDU sessions involving multiple DRBs and QoS Flow Identifiers (QFIs), which PDU sessions are implemented involving UE 101, gNodeB 102, UPF 903, and DNNs 9011a and 9011b):
1) The transport connection between the base station (i.e., CU-UP) and the UPF 903 uses a single GTP-U tunnel per PDU session, as shown in FIG. 8. The PDU session is identified using GTP-U TEID (Tunnel Endpoint Identifier).
2) The transport connection between the DU and the CU-UP uses a single GTP-U tunnel per DRB (see, e.g., FIG. 8).
3) SDAP:
   a) The SDAP (Service Adaptation Protocol) Layer receives downlink data from the UPF 903 across the NG-U interface.
   b) The SDAP maps one or more QoS Flow(s) onto a specific DRB.
   c) The SDAP header is present between the UE 101 and the CU (when reflective QoS is enabled), and includes a field to identify the QoS flow within a specific PDU session.
4) GTP-U protocol includes a field to identify the QoS flow and is present between CU-UP and UPF 903 (in the core network).
FIG. 8 illustrates multiple PDU sessions involving multiple DRBs and QoS Flow Identifiers (QFIs).

In this section, standardized 5QI to QoS characteristics mapping will be discussed. As per 3GPP TS 23.501, the one-to-one mapping of standardized 5QI values to 5G QoS characteristics is specified in Table 1 shown below. The first column represents the 5QI value. The second column lists the different resource types, i.e., as one of Non-GBR, GBR, Delay-critical GBR. The third column ("Default Priority Level") represents the priority level Priority 5QI, for which the lower the value the higher the priority of the corresponding QoS flow. The fourth column represents the Packet Delay Budget (PDB), which defines an upper bound for the time that a packet may be delayed between the UE and the N6 termination point at the UPF. The fifth column represents the Packet Error Rate (PER). The sixth column represents the maximimum data burst volume for delay-critical GBR types. The seventh column represents averaging window for GBR, delay critical GBR types. Note that only a subset of 5QI values defined in 3GPP TS 23.501 are shown in Table 1 below.

For example, as shown in Table 1, 5QI value 1 represents GBR resource type with the default priority value of 20, PDB of 100 ms, PER of 0.01, and averaging window of 2000ms. Conversational voice falls under this catogery. Similarly, as shown in Table 1, 5QI value 7 represents non-GBR resource type with the default priority value of 70, PDB of 100ms and PER of 0.001. Voice, video (live streaming), and interactive gaming fall under this catogery.

**Table 1**

| **5QI Value** | **Resource Type** | **Default Priority Level** | **Packet Delay Budget (NOTE 3)** | **Packet Error Rate** | **Default Maximum Data Burst Volume (NOTE 2)** | **Default Averaging Window** | **Example Services** |
|---|---|---|---|---|---|---|---|
| 1 | GBR (NOTE 1) | 20 | 100 ms (NOTE 11, NOTE 13) | 10⁻² | N/A | 2000 ms | Conversational Voice |
| 2 | | 40 | 150 ms (NOTE 11, NOTE 13) | 10⁻³ | N/A | 2000 ms | Conversational Video (Live Streaming) |
| 3 | | 30 | 50 ms (NOTE 11, NOTE 13) | 10⁻³ | N/A | 2000 ms | Real Time Gaming, V2X messages (see TS 23.287 [121]) Electricity distribution - medium voltage. Process automation monitoring |
| 4 | | 50 | 300 ms (NOTE 11, NOTE 13) | 10⁻⁶ | N/A | 2000 ms | Non-Conversational Video (Buffered Streaming) |
| 65 (NOTE 9, NOTE 12) | | 7 | 75 ms (NOTE 7, NOTE 8) | 10⁻² | N/A | 2000 ms | Mission Critical user plane Push To Talk voice (e.g., MCPTT1 |
| 66 (NOTE 12) | | 20 | 100 ms (NOTE 10, NOTE 131 | 10⁻² | N/A | 2000 ms | Non-Mission-Critical user plane Push To Talk voice |
| 67 (NOTE 12) | | 15 | 100 ms (NOTE 10, NOTE 13) | 10⁻³ | N/A | 2000 ms | Mission Critical Video user plane |
| 75 (NOTE 14) | | | | | | | |
| 71 | | 56 | 150 ms (NOTE 11, NOTE 13, NOTE 15) | 10⁻⁶ | N/A | 2000 ms | "Live" Uplink Streaming (e.g. TS 26238 [76]) |
| 72 | | 56 | 300 ms (NOTE 11, NOTE 13, NOTE 15) | 10⁻⁴ | N/A | 2000 ms | "Live" Uplink Streaming (e.g. TS 26.238 [76]) |
| 73 | | 56 | 300 ms (NOTE 11, NOTE 13, NOTE 15) | 10⁻⁸ | N/A | 2000 ms | "Live" Uplink Streaming (e.g. TS 26 238 [76]) |
| 74 | | 56 | 500 ms (NOTE 11, NOTE 15) | 10⁻⁸ | N/A | 2000 ms | "Live" Uplink Streaming (e g TS 26 238 [76]) |
| 76 | | 56 | 500 ms (NOTE 11, NOTE 13, NOTE 15) | 10⁻⁴ | N/A | 2000 ms | "Live" Uplink Streaming (e.g. TS 26 238 [76]) |
| 5 | Non-GBR (NOTE 1) | 10 | 100 ms NOTE 10 NOTE 13) | 10⁻⁶ | N/A | N/A | IMS Signalling |
| 6 | | 60 | 300 ms (NOTE 10, NOTE 13) | 10⁻⁶ | N/A | N/A | Video (Buffered Streaming) TCP-based (e.g., www, e-mail, chat, ftp, p2p file shanng, progressive video, etc.) |
| 7 | | 70 | 100 ms (NOTE 10, NOTE 13) | 10⁻³ | N/A | N/A | Voice, Video (Live Streaming) Interactive Gaming |

Load Balancing (LB) refers to handing over certain UEs from an overloaded cell to an underloaded cell so that the overall load is distributed equally among the cells. Uniform load across cells will minimize rejection of UEs during admission control and helps to maintain good performance in terms of UE throughput because each cell that is not in overloaded condition will have enough resources for allocation to UEs. LB is implemented by handing over a certain number of UEs from currently-assigned cell(s) to their respective neighboring cells. Some of the key issues for load balancing in O-RAN networks during overload condition include: i) identifying the appropriate number of UEs that should be offloaded, and ii) identifying the specific UEs that should be offloaded.

Accordingly, there is a need for a system and method to optimize identifying the specific UEs and the number of UEs that should be offloaded for load balancing in O-RAN networks.

### SUMMARY

Accordingly, what is desired is a system and method to optimize identifying the specific UEs and the number of UEs that should be offloaded for load balancing in O-RAN networks.

According to an example embodiment of a method ("Method 1"), all UEs which are eligible to be offloaded to a neighboring base station are evaluated to select those UEs which are utilizing PRB resources inefficiently, and the selected UEs are handed off from the serving cell to a neighboring cell to reduce the serving cell load.

According to an example variant of Method 1, gNB-DU will provide information about per-UE average PRB usage measured in certain configurable time duration T for all the UEs or for a certain subset of UEs to gNB-CU-CP across the F1-C interface, and gNB-CU-CP can select a certain subset of UEs for load balancing according to specified criterion.

According to an example variant of Method 1, instead of providing information as in approach 1, gNB-DU will provide an *ordered list* of UEs that gNB-CU-CP can consider for LB. For example, the UE at the head of the list has the worst UE efficiency as defined below, and the next UE has the second worst UE Efficiency, etc.

According to an example variant of Method 1, UE Efficiency is defined as the number of bytes transmitted per PRB in some configurable time duration *T*. The number of bytes X is defined to be the total size of the transport blocks (TB) scheduled in the time interval *T*. If *Y* is defined as the number of PRBs expended to transmit the *X* bytes, we define UE efficiency as *X*/*Y.*

According to an example variant of Method 1, UE Efficiency is defined as the average "rank-MCS" product. That is, each time a UE is scheduled in a subframe that falls in the time interval T, we find the product rank*MCS for the UE, and then find the average of all such measurements for the UE. Here, MCS is the Modulation and Coding Scheme index which can be supported in a given slot.

According to an example method ("Method 2"), rather than maintaining a static number of UEs selected for load balancing, the number of UEs selected for load balancing is increased when the overload persists.

According to an example variant of Method 2, the following rules are applied: 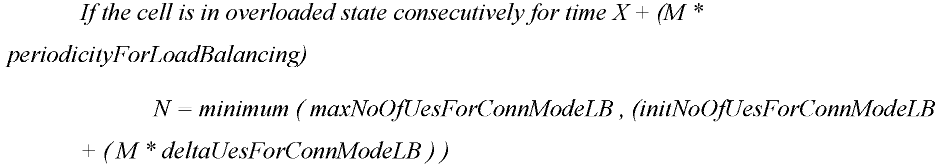 *with* M being increased by 1 for every *periodicityForLoadBalancing*

According to an example variant of Method 2, additive increase in the number of UEs for load balancing is implemented for a specified number of cycles, and then an exponential increase is implemented, by applying the following rules: 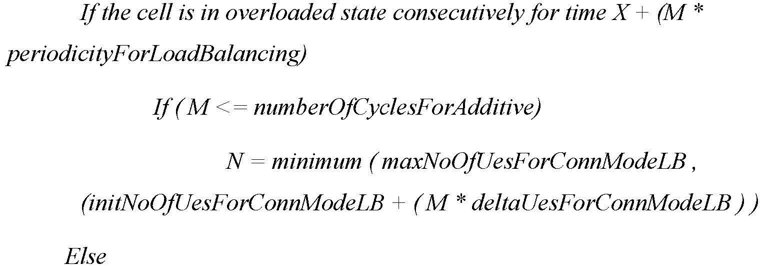 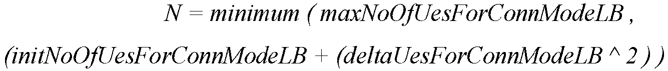 *with M* being increased by 1 for every *periodicityForLoadBalancing*

According to an example method ("Method 3"), the CU derives the list of UEs to be considered for load balancing, e.g., by including a selected number of UEs with low reference signal received power (RSRP) in the list of UEs considered for load balancing.

According to an example embodiment of Method 3, the following steps (among others) are implemented: a) the CU compiles an ordered list of UEs (e.g., in ascending order of RSRP values) as a set, e.g., Set X; and b) to achieve an appropriate mix of low-RSRP UEs and sufficiently good RSRP UEs for the load balancing, the parameter *lowRsrpUesPercentForConnModeLB* is used to specify what percentage of low-RSRP UEs need to be selected from the ascending order of RSRP for the load balancing.

According to an example method ("Method 4"), at least portions of two of the above-described example embodiments (i.e., embodiments of Methods 1, 2 and/or 3) are combined.

According to an example method ("Method 5"), an RIC-assisted load balancing is implemented, i.e., all the information flow (e.g., messages) discussed in connection with embodiments of Methods 1-4 will be routed to the RIC (e.g., near-RT RIC) over the E2 interface, and the procedures discussed in connection with the embodiments of Methods 1-4 will be executed in the near-RT RIC.

For this application the following terms and definitions shall apply:

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

The above-described and other features and advantages of the present disclosure will be appreciated and understood by those skilled in the art from the following detailed description, drawings, and appended claims.

### DESCRIPTION OF THE DRAWINGS

FIG. 1 is a block diagram illustrating the user plane stack of 5G NR.
FIG. 2 is a block diagram illustrating the user plane protocol stacks for a PDU session of 5G NR.
FIG. 3 is a block diagram illustrating the control plane stack of 5GNR.
FIG. 4 is a block diagram illustrating NG-RAN architecture.
FIG. 5 is a block diagram illustrating separation of CU-CP and CU-UP in NG-RAN architecture.
FIG. 6 illustrates an overview of O-RAN architecture.
FIG. 7 illustrates an example PDU session consisting of multiple DRBs.
FIG. 8 illustrates multiple PDU sessions involving multiple DRBs and QoS Flow Identifiers (QFIs).
FIG. 9 illustrates message flow over the E2 interface between O-DU and near-RT RIC for example Method 1.
FIG. 10 illustrates message flows among O-DU, O-CU, and near-RT RIC.

### DETAILED DESCRIPTION

In load balancing, the following steps are implemented:
1. Collect the statistics of all the serving cells of 4G base station (eNB) or 5G base station (gNB) (e.g., PRB usage, number of users, etc.).
2. Collect the statistics of all the neighboring eNB/gNB through the X2/Xn interface procedure (e.g., PRB usage, number of users, etc.).
3. For each of the serving cells, evaluate whether the serving cell is overloaded (e.g., based on PRB usage, number of users, etc.).
4. If the serving cell is overloaded, do as follows
   a. Identify how many UEs can be handed over from the serving cell.
   b. Identify which UEs can be handed over from serving cell.
   c. For each identified UE,
      i. Select the neighbor frequencies/cells which are not overloaded;
      ii. Configure the Inter-frequency RRC measurement towards the UE (typically A4);
      iii. On receiving the measurement result, identify the target neighbor cell and trigger the handover.

According to example embodiments of the method according to the present disclosure, steps 4a and 4b in the above-described sequence of steps are optimized, as described in detail below.

Example Embodiment 1 (Method 1): One objective of load balancing algorithm is to identify UEs whose PRB usage (either in UL, DL, or both) is relatively high and who are using the resources inefficiently. For example, a high number of PRBs may be utilized by some UEs to send a small number of information bits. Method I evaluates all UEs (which are eligible to be offloaded to a neighboring base station) and selects UEs which are utilizing PRB resources inefficiently (e.g., those UEs which are utilizing PRB resources least efficiently), which UEs are handed off from the serving cell to a neighboring cell to reduce the serving cell load. The following discussion applies equally to UL as well as DL. Method I is split into two stages, Stage 1 and Stage 2, as described below.

Stage 1: The information about how efficiently UEs are utilizing radio resources (also referred to herein as "UE efficiency" or "radio-resource-use efficiency") is estimated at the gNB-DU (i.e., at the DU of the base station). In that context, two example approaches are provided that relate to what gNB-DU will share with gNB-CU-CP.
1) In approach 1, gNB-DU will provide information about per-UE average PRB usage measured in certain configurable time duration T for all the UEs or for a certain subset of UEs to gNB-CU-CP across the F1-C interface, and gNB-CU-CP can select a certain subset of UEs for load balancing according to specified criterion.
2) In approach 2, instead of providing information as in approach 1, gNB-DU will provide an *ordered list* of UEs (across the F1-C interface) that gNB-CU-CP can consider for LB. For example, the UE at the head of the list has the worst UE efficiency as defined below, and the next UE has the second worst UE Efficiency, etc.

Two example embodiments of techniques are provided to quantify UE's ability to utilize PRB resources by defining UE Efficiency as described below.
1) In one example embodiment, UE Efficiency is defined as the number of bytes transmitted per PRB in some configurable time duration *T*. The number of bytes *X* is defined to be the total size of the transport blocks (TB) scheduled in the time interval *T.* If *Y* is defined as the number of PRBs expended to transmit the *X* bytes, we define UE efficiency as *X*/*Y.*
2) In another example embodiment, UE Efficiency is defined as the average "rank-MCS" product. That is, each time a UE is scheduled in a subframe that falls in the time interval *T*, we find the product rank*MCS for the UE, and then find the average of all such measurements for the UE. Here, MCS is the Modulation and Coding Scheme index which is used for a UE in a given slot. Rank is the transmission rank which indicates the number of spatial layers used in a transmission scheme.

To quantify the relative PRB usage of a UE, we first define an average of per-UE average PRB usage. We propose two example approaches for computing (defining) the average of per-UE average PRB usage.
1. In one example embodiment, an average of per-UE average PRB usage is defined as the arithmetic average of per-UE average PRB usage of individual UEs during the time interval T.
2. In another example embodiment, we weigh per-UE average PRB usage with the fraction of time the UE was in RRC-connected state during the time interval *T.* That is, if *S* is the time for which UE was RRC-connected during time interval T (*S* < *T*)*,* then the per-UE average PRB usage will be multiplied by *S*/*T* before finding the arithmetic average. Here, RRC indicates the Radio Resource Control protocol used for control plane communication between the UE and the base station.

For the case when gNB-DU chooses not to provide per-UE average PRB usage and UE efficiency measures to CU for every UE, the following alternative approach can be utilized. First, gNB-DU will compute the average of per-UE average PRB usage over all UEs. Next, gNB-DU will consider the set Z of UEs whose PRB usage is above the average of per-UE average PRB usage. Next, the UEs in the set Z are ordered based on the UE efficiency defined above which is communicated to gNB-CU-CP across the F1-C interface (using the F1AP protocol)

To provide the information discussed above, it is proposed to augment the "Radio Resource Status" Information Element (IE) of Section 9.3.1.129 of 3GPP TS 38.473: "F1 Application Protocol (F1 AP)" with the new list parameter "perUePrbUsage", where perUePrbUsage will be of the data type (gNB-DU UE F1 AP ID, prbUsage). To obtain per-DRB usage information, we propose to introduce the IE "perDrbPrbUsage", where perDrbPrbUsage will of the data type (gNB-DU UE F1 AP ID, DRB ID, perDrbPrbUsage).

Stage 2: The gNB-CU-CP will utilize the information received from gNB-DU for LB by first assembling a candidate list of UEs to be considered for handover (HO). In one example embodiment, gNB-CU-CP will prepare the candidate list based on per-UE average PRB usage as follows. In Step 1, gNB-CU-CP will follow selected general guidelines to exclude certain UEs from being considered for HO. For example, gNB-CU-CP may exclude voice over new radio (VoNR) UE, UEs which do not support inter-frequency measurements, UEs for which handover (HO) is ongoing, or UEs which have not spent sufficient time (e.g., for at least a specified threshold time period) in the RRC-connected state, etc. Furthermore, gNB-CU-CP will also apply a rule that stipulates not more than a certain number of UEs, e.g., *N,* be considered for LB. Thus, in Step 2, gNB-CU-CP will trim the UE list obtained in Step 1, as described below.

For Step 2, let the number of UEs for which gNB-DU reported PRB usage be *P*, and we will consider example two cases:
1) Case 1: If *P* is larger than *N,* then choose the first *N* of *P* UEs that match the list computed in Step1.
2) Case 2: If *P* is less than *N*, then after considering all the UEs in the list provided by DU, some more UEs may need to be considered. For example, gNB-CU-CP will ask DU to provide list of some more UEs which can be offloaded, and gNB-CU-CP will consider this list to select the UEs to offload. If DU doesn't provide such a list of UEs, gNB-CU-CP will select additional UEs randomly from the remaining UEs. Suitable F1-C messages are added for this purpose in interfacing between 5G gNB CU-CP and DU. Similarly, these are added for interface between 4G CU and 4G DU too for 4G eNB.

Value of *N* can also be adapted dynamically based on factors such as incoming calls per second (CPS) rate and PRB load to be reduced. As an example, if the incoming CPS rate is higher than the rate at which UEs are being offloaded, a cell can remain in overload state for extended period of time and worsen the quality of service for users served by the overloaded cell. To address such a scenario, the value of *N* can be dynamically adjusted (e.g., set to higher value in this example) such that target PRB loading can be achieved quickly. Similarly, let us consider another example scenario where PRB overload threshold is, e.g., 70%, and actual PRB usage is, e.g., 95%, and the cell is in overload state. In this example, PRB load is to be reduced in the overloaded cell (to bring down the actual PRB usage from 95% to 70%) and the value of *N* can be adapted to help in reducing the overload in shorter duration.

Example Embodiment 2 (Method 2): *N*, which indicates the number of UEs to be considered for load balancing, can be configurable. If the cell is in the overload state for an extended period of time, this indicates that the number of UEs selected for load balancing is insufficient to bring the cell out of the overload state. In this scenario, rather than maintaining a static number of UEs selected for load balancing, it is preferable to increase the number of UEs selected for load balancing when the overload persists. Two example approaches for increasing the number of UEs will be discussed below.

Subvariant 1: In this subvariant, additive increase in the number of UEs for load balancing is implemented, as outlined below.

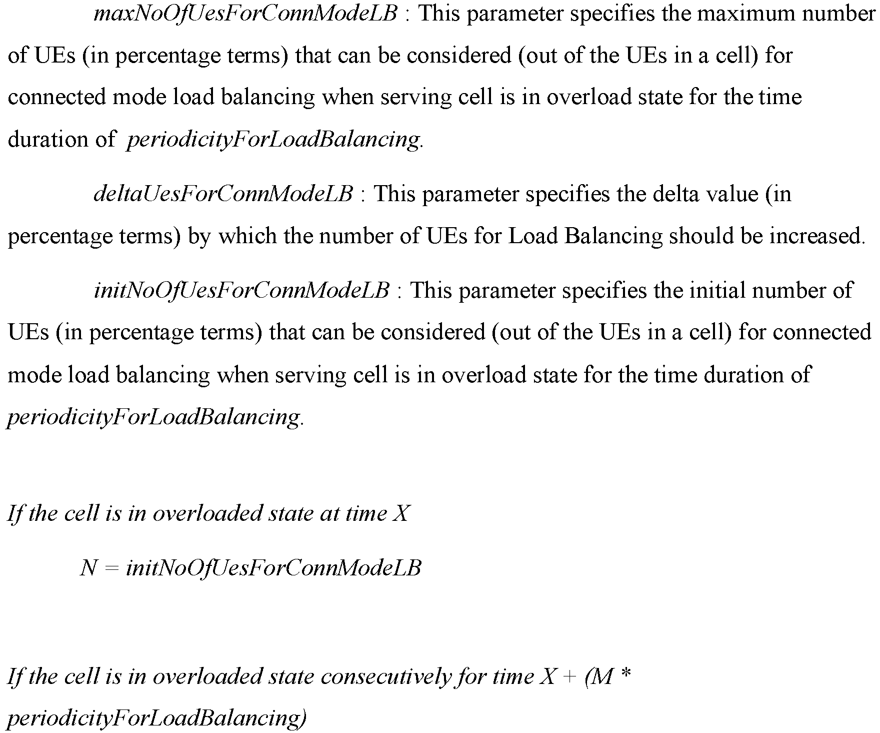

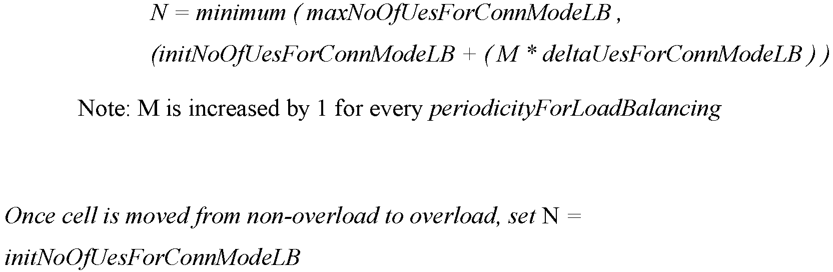

An example of applying the above-outlined Subvariant 1 is provided below:
*maxNoOfUesForConnModeLB =* 20%
*deltaUesForConnModeLB =* 2%
*initNoOfUesForConnModeLB* = 5%
Let's assume the maximum number of users in a cell as 100, and *periodicityForLoadBalancing* is set as 10 seconds. When the cell is overload at time X, 5 UEs (5% of 100) can be considered for the load balancing. If the cell is overloaded at time X + 10, 7 UEs (5% + 2%) can be considered for the load balancing. In this manner, the number of UEs considered for load balancing can be increased up to the maximum value of 20 (*maxNoOfUesForConnModeLB*), i.e., the number of UEs considered for load balancing in this Subvariant 1 is increased as follows: 5, 7, 9, 11, 13, 15, 17, 19, and 20.

Subvariant 2: In this subvariant, additive increase in the number of UEs for load balancing is implemented for a specified number of cycles, and then an exponential increase is implemented, as outlined below.
*maxNoOfUesForConnModeLB* : This parameter specifies the maximum number of UEs (in percentage terms) that can be considered (out of the UEs in a cell) for connected mode load balancing when serving cell is in overload state for the time duration of *periodicityForLoadBalancing.*
*deltaUesForConnModeLB* : This parameter specifies the delta value (in percentage terms) by which the number of UEs for Load Balancing should be increased.

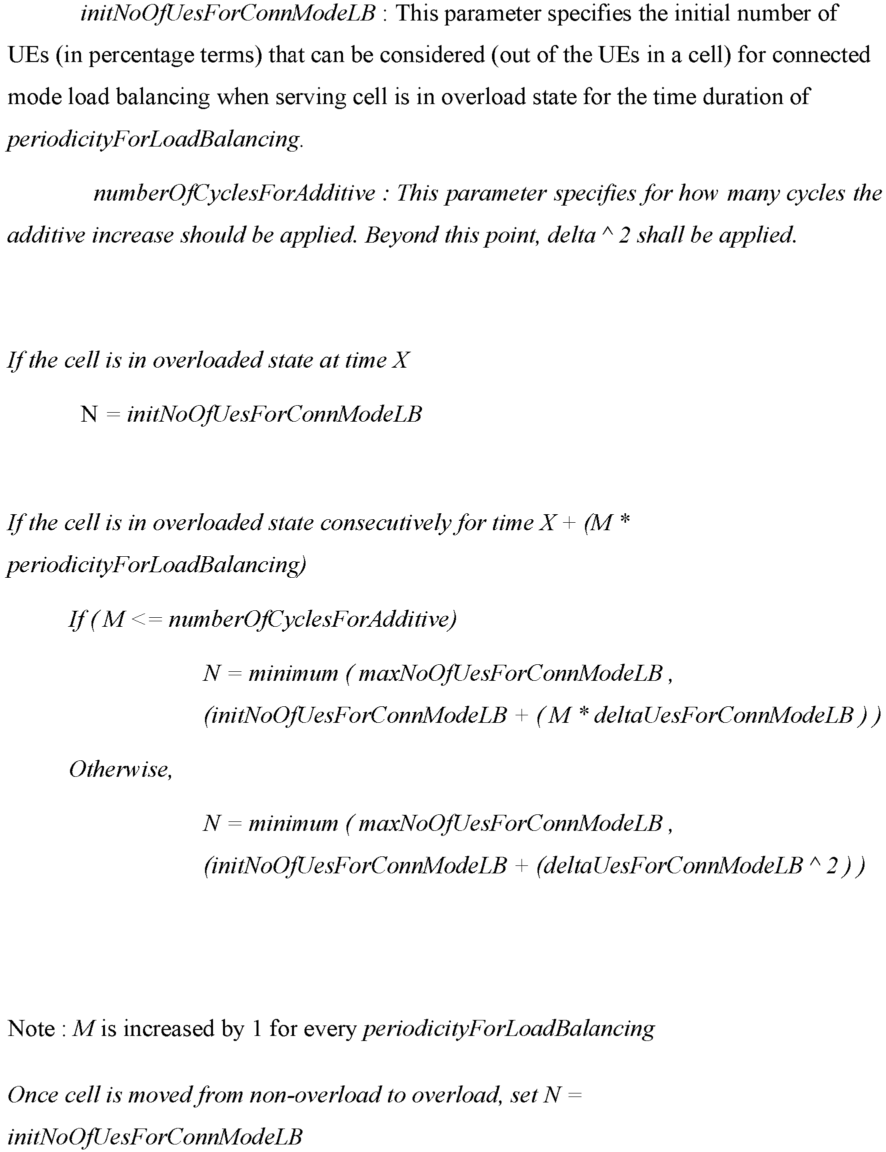

An example of applying the above-outlined Subvariant 1 is provided below: 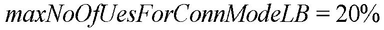 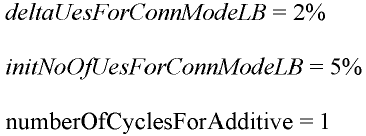 Let's assume the maximum number of users in a cell as 100, and *periodicityForLoadBalancing* is set as 10 seconds. When the cell is overload at time X, 5 UEs (5% of 100) can be considered for the load balancing. If the cell is overloaded at time X + 10, 7 UEs (5% + 2%) can be considered for the load balancing. If the cell is overloaded at time *X*+ 20, 11 UEs can be considered for the load balancing (7 + 2^2). Similarly, atX+30, 15 UEs can be considered for the load balancing ( 11 + 2^2). In this manner, the number of UEs considered for load balancing can be increased up to the maximum value of 20 (*maxNoOfUesForConnModeLB*), i.e., the number of UEs considered for load balancing in this Subvariant 1 is increased as follows: 5, 7, 11, 15, 19, and 20.

Example Embodiment 3 (Method 3): Situations can arise when the DU is not able to provide the list of UEs that can be considered for load balancing (e.g., due to hardware and/or software limitations at the DU), or when the DU is not able to identify the PRB usage for each UE or DRB (e.g., due to hardware and/or software limitations at the DU), and hence the DU is not able to provide to the CU-CP the PRB usage, resource block size, rank and MCS at per-UE or DRB level. In these situations, the CU needs to derive the list of UEs to be considered for load balancing.

According to a first variant of the present example embodiment, a selected number of UEs with low reference signal received power (RSRP) are included in the list of UEs considered for load balancing, as explained below.
1) Once a given UE is connected to the cell, CU shall configure the periodic measurement (e.g., with infinite report amount and with configurable report interval), and the UE will continually report its latest RSRP serving cell measurements to the CU. The CU shall store the latest reported value for each UE.
2) The CU compiles an ordered list of UEs (e.g., in ascending order of RSRP values) as a set, e.g., Set X.
3) In implementing the load balancing trigger, to achieve an appropriate mix of low-RSRP UEs (i.e., those with RSRP below a specified threshold) and sufficiently good RSRP UEs (i.e., those with RSRP above the specified threshold) for the load balancing, the parameter *lowRsrpUesPercentForConnModeLB* is used to specify what percentage of low-RSRP UEs need to be selected from the ascending order of RSRP for the load balancing.

As an example of the above-described variant, if N (i.e., the number of UEs considered for the load balancing) is set as 20, and *lowRsrpUesPercentForConnModeLB* is set as 60%, then the first 12 UEs (60% of 20) from the Set X are to be selected for load balancing, and 8 additional UEs (40% of 20) are to be randomly selected from the remaining UEs in the Set X.

In another example variant, the CU can use DL and UL PDCP data rate of the UEs (along with RSRP measurements from different UEs). UEs having high DL and UL PDCP data rate for consecutive time intervals and low RSRP can be considered for load balancing. For this purpose, in CU split deployment (i.e., CU-CP and CU-UP), the CU-UP can provide PDCP data rate information to CU-CP through E1AP interface. E1AP already supports a mechanism to report the data usage on per-DRB level (i.e., using DATA USAGE REPORT message). In E1AP Data Usage Report message, the CU-UP sends the number of DL and UL usage count in bytes (octet) per DRB in a specific time interval. The CU-CP can use this information to compute the PDCP DL and UL data rate to select candidate UEs for load balancing.

Example Embodiment 4 (Method 4): In this section, we provide example variants which are derived from combining two of the above-described example embodiments (i.e., embodiments 1, 2 and/or 3).
1) In one example variant, at least parts of Embodiments 1 and 2 can be implemented together. For example, from Embodiment 1, the DU provides the list of UEs for load balancing, or the DU helps the CU in identifying the list of UEs for load balancing. In addition, from Embodiment 2, the dynamic manner of increasing the number of UEs is implemented if the overload persists for consecutive cycles.
2) As Embodiment 1 requires higher per-UE level processing at the DU and/or the CU, this could potentially worsen the overload condition in CU/DU. Accordingly, in another example variant, if the Network Function overload (either in the CU or the DU) is detected (e.g., due to CPU issue, hardware issue, etc.), at least parts of Embodiments 2 and 3 can be implemented together. For example, from Embodiment 3, the CU will identify the list of UEs for load balancing. In addition, from Embodiment 2, the dynamic manner of increasing the number of UEs is implemented if the overload persists for consecutive cycles. Once the Network Function come out of the overload state, the first example variant combining Embodiments 1 and 2 can be implemented again.
3) In another example variant, at least parts of Embodiments 1 and 3 can be implemented together for selecting the UEs for load balancing. If the number of UEs identified by the DU for load balancing consideration (represented by the variable M) is less than the variable N (the stipulated maximum number of UEs to be considered for load balancing) discussed in connection with Embodiment 1, then the remaining UEs (i.e., N - M) can be identified by the CU using Embodiment 3.

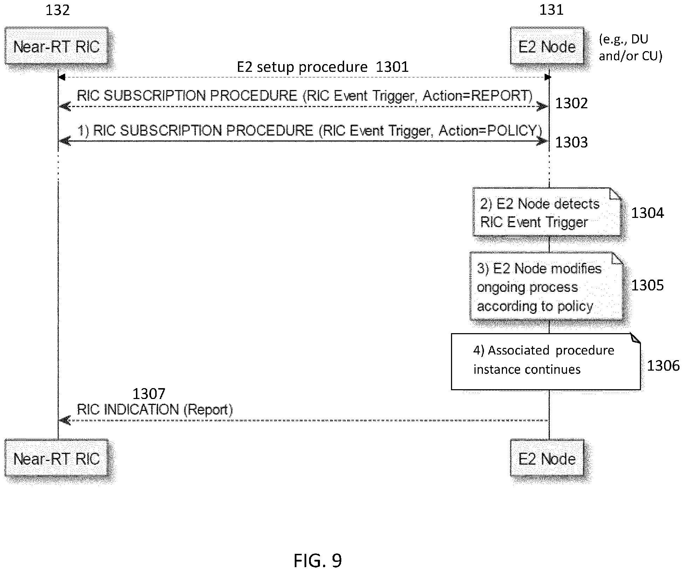

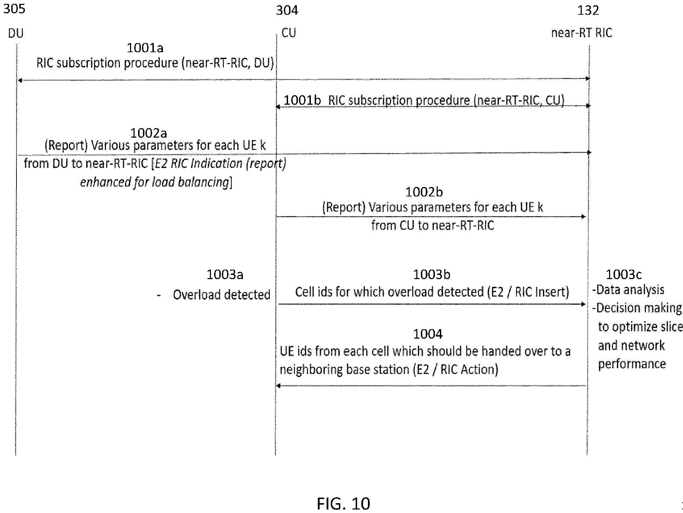

Example Embodiment 5 (Method 5): According to this example embodiment, an RIC-assisted load balancing is implemented, i.e., all the information flow (e.g., messages) discussed in connection with Embodiments 1-4 will be routed to the RIC (e.g., near-RT RIC) over the E2 interface, and the procedures discussed in connection with Embodiments 1-4 will be executed in the near-RT RIC. An example RIC-assisted load balancing implementation involving information flow and procedures discussed in connection with Embodiment 1 is explained below in connection with FIGS. 9 and 10.

As shown in FIG. 9, which is a signal flow diagram of E2AP SUBSCRIPTION procedure utilized for selecting UEs in an O-RAN system using a near-RT RIC module, the example method starts with an E2 setup procedure 1301 between the E2 Node 131 (which encompasses DU and/or CU) and the near-RT RIC 132, which E2 setup procedure is as specified in the O-RAN and 3GPP specifications. The next step involves the RIC subscription procedure including a sequence of actions: i) the Near-RT RIC 132 requests a SUBSCRIPTION from the E2 Node 131 for REPORT, with the corresponding Event Trigger (e.g., periodic trigger), and the E2 Node 131 acknowledges the SUBSCRIPTION (generally referenced by the process arrow 1302); and ii) the Near-RT RIC 132 requests a SUBSCRIPTION from the E2 Node 131 for POLICY, with the corresponding Event Trigger (e.g., periodic trigger), and the E2 Node 131 acknowledges the SUBSCRIPTION (generally referenced by the process arrow 1303). In this manner, the Near-RT RIC 132 subscribes to the selected parameters (as described previously above in connection with Embodiment 1) from the E2 Node (DU) 131 for each UE which can be offloaded to a neighboring base station (neighboring cell) for every time period T, and provides the triggers for the E2 Node 131 to communicate the subscribed information. The information subscribed by the near-RT RIC 132 can include, e.g., the following: i) parameters used to compute UE efficiency (e.g., data bytes communicated in DL and UL for the given UE for time period T, and average (rank x MCS) for the given UE during time period T); and ii) PRB utilization of the given UE during time period T. Subsequently, the E2 Node 131 (DU) detects the RIC event trigger (as shown in box 1304). In the case of the REPORT trigger event occurring, the REPORT service sends the above-listed parameters from the E2 Node 131 (DU) to the Near-RT RIC 132 in an RIC INDICATION report (as shown by the process arrow 1307). The Near-RT RIC 132 uses the received information to implement the selection of UEs for load balancing as discussed above. In parallel, E2 Node 131 (DU) continues to run radio resource management methods (including scheduling methods), as shown in box 1306. Once the event corresponding to the POLICY action is triggered at the Near-RT RIC 132 (which occurs when overload condition is detected), the near-RT RIC 132 communicates to the E2 Node (i.e., CU in this case) the IDs of those UEs to be handed over to a neighboring base station, and the E2 Node (i.e., CU) hands over the identified UEs according to information contained in the POLICY description (i.e., the identified UEs are handed over to the neighboring base station (cell)), as summarized in box 1305.

We now turn to FIG. 10, which illustrates signal flows involving DU 305, CU 304 and near-RT RIC 132 for implementing example Embodiment 1. Initially, RIC subscription procedure is implemented between near-RT RIC 132 and DU 305 (as shown by the process arrow 1001a), as well as between near-RT RIC 132 and CU 304 (as shown by the process arrow 1001b). DU 305 sends (as shown by the process arrow 1002a) an E2 RIC Indication (report) enhanced for load balancing, which report contains various parameters for each UEₖ (as described above in connection with Embodiment 1), and CU 304 sends (as shown by the process arrow 1002b) a report which contains various parameters for each UEₖ (as described above in connection with Embodiment 1). Once an overload condition is detected (as shown by 1003a), CU 304 sends to the near-RT RIC 132 (as shown by the process arrow 1003b, with designation "E2/RIC Insert") cell ID(s) for which overload condition has been detected. The near-RT RIC 132 performs (as shown by 1003c) data analysis on the recived information (from the CU 304 and DU 305) to make decisions for optimizing slice and network performance. Subsequently, the near-RT RIC 132 sends (as shown by the process arrow 1004, with designation "E2/RIC Action") UE IDs from each relevant cell which should be handed over to a neighboring base station, and CU 304 performs the handover of the identified UEs.

Although FIGS. 9 and 10 illustrated the load balancing implementation of example Embodiment 1, E2 Node 131 and the near-RT RIC 132 can similarly implement the information exchange and the procedures of example Embodiments 2 and 3, whereby the relevant parameters utilized for example Embodiments 2 and 3 are analyzed at the near-RT RIC 132 and the resulting load balancing action (e.g., handover of selected UEs to neighboring base station) is communicated to the E2 Node 131.

While the present disclosure has been described with reference to one or more exemplary embodiments, it will be understood by those skilled in the art that various changes may be made and equivalents may be substituted for elements thereof without departing from the scope of the present disclosure. For example, although the example methods have been described in the context of 5G cellular networks, the example methods are equally applicable for 4G and other similar wireless networks. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

For the sake of completeness, a list of abbreviations used in the present specification is provided below:
3GPP: 3rd Generation Partnership Project
5GC: 5G Core Network
5G NR: 5G New Radio
SQI: 5G QoS Identifier
ACK: Acknowledgement
AM: Acknowledged Mode
APN: Access Point Name
ARP: Allocation and Retention Priority
BS: Base Station
CP: Control Plane
CQI: Channel Quality Indicator
CU: Centralized Unit
CU-CP: Centralized Unit - Control Plane
CU-UP: Centralized Unit - User Plane
DBS: Desired Buffer Size
DL: Downlink
DDDS: DL Data Delivery Status
DDR: Desired Data Rate
DNN: Data Network Name
DRB: Data Radio Bearer
DU: Distributed Unit
eNB: evolved NodeB
EPC: Evolved Packet Core
GBR: Guaranteed Bit Rate
gNB: gNodeB
GTP-U: GPRS Tunneling Protocol - User Plane
IP: Internet Protocol
L1: Layer 1
L2: Layer 2
L3: Layer 3
L4S: Low Latency, Low Loss and Scalable Throughput
LC: Logical Channel
MAC: Medium Access Control
MCS: Modulation and Coding Scheme
NACK: Negative Acknowledgement
NAS: Non-Access Stratum
NR-U SN: New Radio - User Plane, Sequence Number
NR-UP SN: New Radio - User Plane, Sequence Number. (Used interchangeably with NR-U SN)
NSI: Network Slice Instance
NSSI: Network Slice Subnet Instance
O-RAN: Open Radio Access Network
PDB: Packet Delay Budget
PDCP : Packet Data Convergence Protocol
PDU: Protocol Data Unit
PHY: Physical Layer
PRB: Physical Resource Block
QCI: QoS Class Identifier
QFI: QoS Flow Id
QoS : Quality of Service
QFI: QoS Flow Identifier
RAT: Radio Access Technology
RDI: Reflective QoS Flow to DRB Indication
RLC: Radio Link Control
RLC-AM: RLC Acknowledged Mode
RLC-UM: RLC Unacknowledged Mode
RQI: Reflective QoS Indication
RRC: Radio Resource Control
RRM: Radio Resource Management
RTP: Real-Time Transport Protocol
RTCP: Real-Time Transport Control Protocol
RU: Radio Unit
SCTP: Stream Control Transmission Protocol
SD: Slice Differentiator
SDAP: Service Data Adaptation Protocol
SLA: Service Level Agreement
S-NSSAI: Single Network Slice Selection Assistance
SNL Sequence Number
SST: Slice / Service Type
TB: Transport Block
TCP: Transmission Control Protocol
TEID: Tunnel Endpoint Identifier
UE: User Equipment
UP: User Plane
UL: Uplink
UM: Unacknowledged Mode
UPF: User Plane Function

## Claims

1. A method for load balancing in an Open Radio Access Network (O-RAN) system having an overloaded serving cell of a first base station, comprising:
determining, by at least the first base station, radio-resource-usage efficiency of each one of at least a subset of user equipments (UEs) in the overloaded serving cell;
determining, by using at least the first base station, from at least the subset of UEs a list of candidate UEs for handover from the overloaded serving cell to a non-overloaded neighboring cell, based on one of i) per-UE average physical resource block (PRB) usage over a specified time period, or ii) per-UE average of measurements involving modulation-and-coding-scheme over a specified time period; and
handing over, by the first base station, at least a selected number of UEs from the list of candidate UEs to the non-overloaded neighboring cell to implement load balancing.

2. The method of claim 1, wherein the list of candidate UEs for handover is determined based on an arithmetic average of per-UE average PRB usage of individual UEs during the specified time period.

3. The method of claim 1, wherein the list of candidate UEs for handover is determined by weighing per-UE average PRB usage with a fraction of time a UE was radio-resource-control (RRC)-connected during the specified time period.

4. The method of claim 1, wherein:
a distributed unit (DU) of the first base station provides one of i) per-UE average physical resource block (PRB) usage over a specified time period, or ii) an ordered list of potential UEs to be considered for handover from the overloaded serving cell to a non-overloaded neighboring cell, the ordered list including UEs with the worst radio-resource-usage efficiency in the overloaded cell.

5. The method of claim 4, wherein:
the potential UEs to be considered for handover from the overloaded serving cell to a non-overloaded neighboring cell are determined by i) computing an average of per-UE average PRB usage over all UEs in the overloaded cell, and ii) selecting UEs with PRB usage above the computed average of per-UE average PRB usage over all UEs.

6. The method of claim 4, wherein:
a centralized unit control plane (CU-CP) of the first base station generates the list of candidate UEs for handover from the overloaded serving cell based on the per-UE average PRB usage over the specified time period provided by the DU of the first base station.

7. The method of claim 6, wherein:
the CU-CP generates the list of candidate UEs for handover by applying the following conditions:
i) excluding UEs which exhibit at least one of the following characteristics: voice over new radio (VoNR) UEs; UEs which do not support inter-frequency measurements; UEs for which handover is ongoing; and UEs which have not been in radio resource control (RRC)-connected state for at least a specified threshold time period; and
ii) the total number of UEs in the list of candidate UEs considered for handover does not exceed a specified number N.

8. The method of claim 7, further comprising:
dynamically adjusting the value of *N* one of i) based on incoming calls per second (CPS) rate and a rate at which UEs are being offloaded, or ii) based on a specified PRB overload threshold and actual PRB usage.

9. The method of claim 1, wherein:
a total number N of UEs in the list of candidate UEs considered for handover is iteratively increased linearly by a specified percentage of UEs in the overloaded cell after each specified time period *T* for handover, up to a specified maximum number of UEs to be considered for handover.

10. The method of claim 1, wherein:
a total number N of UEs in the list of candidate UEs considered for handover is i) iteratively increased linearly by a specified percentage of UEs in the overloaded cell after each one of a specified number of cycles of specified time period *T* for handover, and thereafter ii) iteratively increased exponentially, up to a specified maximum number of UEs to be considered for handover.

11. The method of claim 1, wherein:
a centralized unit (CU) of the first base station generates the list of candidate UEs for handover from the overloaded serving cell based on at least reference signal received power (RSRP) measurements of UEs.

12. The method of claim 11, wherein:
the CU of the first base station generates the list of candidate UEs for handover from the overloaded serving cell based on the RSRP measurements of UEs and Packet Data Convergence Protocol (PDCP) data rates of UEs.

13. The method of claim 4, wherein:
a total number N of UEs in the list of candidate UEs considered for handover is iteratively increased linearly by a specified percentage of UEs in the overloaded cell after each specified time period *T* for handover, up to a specified maximum number of UEs to be considered for handover.

14. The method of claim 1, wherein:
a distributed unit (DU) of the first base station provides at least a first portion of specified maximum number of UEs to be considered for handover from the overloaded serving cell to a non-overloaded neighboring cell; and
a centralized unit (DU) of the first base station provides at least a second portion of specified maximum number of UEs to be considered for handover from the overloaded serving cell.

15. The method of claim 1, further comprising:
providing, by the first base station to a near-real-time radio intelligent controller (near-RT RIC), selected parameters for each UE in the overloaded cell, said parameters including at least one of i) per-UE average physical resource block (PRB) usage over a specified time period, and ii) information regarding radio-resource-usage efficiency of each UE;
selecting, by the near-RT RIC, UEs for handover from the overloaded serving cell to a non-overloaded neighboring cell, based on the selected parameters provided by the first base station; and
informing, by the near-RT RIC to the first base station, the selected UEs for handover from the overloaded serving cell.
